(19) Europäisches Patentamt
European Patent Office
Office européen des brevets

(11) Veröffentlichungsnummer: **0 005 747**
**B1**

# (12) EUROPÄISCHE PATENTSCHRIFT

(45) Veröffentlichungstag der Patentschrift: **10.06.81**

(51) Int. Cl.³: **C 07 F 9/50**

(21) Anmeldenummer: **79101397.2**

(22) Anmeldetag: **08.05.79**

## (54) Verfahren zur Herstellung von Triphenylphosphin.

(30) Priorität: **02.06.78 CH 6072/78**

(43) Veröffentlichungstag der Anmeldung: **12.12.79 Patentblatt 79/25**

(45) Bekanntmachung des Hinweises auf die Patenterteilung: **10.06.81 Patentblatt 81/23**

(84) Benannte Vertragsstaaten: **AT BE CH DE FR GB IT NL**

(56) Entgegenhaltungen:
**FR-A-1 423 378**
**ANGEWANDTE CHEMIE, Band 89, Nr. 8 1977, Seite 558**
**ZEITSCHRIFT FÜR ANORGANISCHE ALLGEMEINE CHEMIE, Band 369, 1969, Seiten 33—37**

(73) Patentinhaber: **F. HOFFMANN-LA ROCHE & CO. Aktiengesellschaft, CH-4002 Basel (CH)**

(72) Erfinder: **Broger, Emil Albin, Dr., Obere Egg 11, CH-4465 Magden (CH)**

(74) Vertreter: **Kerr, Andrew et al, Grenzacherstrasse 124 Postfach 601, CH-4002 Basel (CH)**

**EP 0 005 747 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

# Verfahren zur Herstellung von Triphenylphosphin

Das als Reagens für Polyensynthesen verwendbare Triphenylphosphin kann bekanntlich durch Regenerierung des bei solchen Polyensynthesen anfallenden Triphenylphosphinoxids wiedergewonnen werden.

Bei einem derartigen Regenerierungsverfahren geht man beispielsweise so vor, daß man das Triphenylphosphinoxid durch Chlorierung, beispielsweise mittels Phosgen, in das Triphenylphosphindichlorid überführt und letzteres einer Hydrogenolyse unterwirft, wobei man Triphenylphosphin erhält. Die Hydrogenolyse des Triphenylphosphindichlorids wurde bisher beispielsweise mit Wasserstoff unter Druck durchgeführt (Angew. Chem. 89 [1977] 558).

Es wurde nun überraschend festgestellt, daß diese Hydrogenolyse in sehr einfacher und vorteilhafter Weise mit Wasserstoff in Gegenwart bestimmter Katalysatoren durchgeführt werden kann.

Das erfindungsgemäße Verfahren zur Herstellung von Triphenylphosphin durch Hydrogenolyse von Triphenylphosphindichlorid besteht dementsprechend darin, daß man die Hydrogenolyse in Gegenwart eines inerten Lösungsmittels mit Wasserstoff in Gegenwart eines Platin-, Palladium-, Rhodium-, Ruthenium- und/oder Iridiumkatalysators durchführt.

Der Katalysator kann hierbei eines der genannten Metalle oder auch mehrere dieser Metalle enthalten, und zwar in metallischer Form oder in Form einer Metallverbindung, z. B. eines Halogenids. Gegebenenfalls können Katalysatorträger, beispielsweise Kohle, Aluminiumoxid, Siliciumdioxid oder dergleichen verwendet werden.

Die erfindungsgemäße Hydrogenolyse wird zweckmäßig unter Normaldruck durchgeführt, jedoch können auch höhere Drücke, bis etwa 100 bar, angewendet werden.

Die bei dieser Hydrogenolyse angewendeten Temperaturen hängen von der Stabilität des Lösungsmittels ab und können beispielsweise zwischen etwa 30 und 130° C liegen; vorzugsweise wird bei Temperaturen von 50—60° C gearbeitet.

Bei Anwendung von niederen Temperaturen und Drücken wird als Lösungsmittel zweckmäßig ein mindestens zwei Sauerstoffatome enthaltender Äther verwendet, und zwar vorzugsweise Dioxan, oder 1,2-Dialkoxyäthane, wie 1,2-Dimethoxyäthan.

Wenn höhere Temperaturen und Drücke angewendet werden, eignen sich als Lösungsmittel auch beispielsweise Chloroform, Benzol, Toluol, Xylol, Cyclohexan und Äthylacetat.

Das als Ausgangsmaterial verwendete Triphenylphosphindichlorid sollte frei von dem zu seiner Herstellung verwendeten Chlorierungsmittel, beispielsweise Phosgen, sein. Das Ausgangsmaterial kann aber auch in Form eines Chloroformadduktes

$$[(C_6H_5)_3PCl_2 \cdot CHCl_3]$$

eingesetzt werden.

Das erfindungsgemäße Verfahren kann sowohl absatzweise, als auch kontinuierlich durchgeführt werden.

Der Katalysator kann in katalytischen Mengen, z. B. in Mengen bis etwa 5%, verwendet werden, wobei die Verwendung größerer Mengen nicht kritisch ist.

## Beispiel 1

In einem Glaskolben mit Stahlrührer wird eine Suspension von 133,3 g Triphenylphosphindichlorid und 9 g 5proz. Platinkohle in 1 Liter trockenem Dioxan bei 50° und Normaldruck während 4 Stunden hydriert. Der Katalysator wird abfiltriert und mit Dioxan gewaschen. Nach Eindampfen des Filtrates wird der Rückstand aus Methanol umkristallisiert. Ausbeute 88,5 g (84,5%) Triphenylphosphin, Smp 80—81°. Die Mutterlauge wird recyclisiert.

## Beispiel 2

Eine Suspension von 18,1 g Triphenylphosphindichlorid-Chloroformaddukt

$$[(C_6H_5)_3PCl_2 \cdot CHCl_3]$$

und 0,5 g Palladiumchlorid in 100 ml 1,2-Dimethoxyäthan wird bei 50° und 30 bar Wasserstoff, während 16 Stunden hydriert. Ausbeute 8,6 g (81,8%) Triphenylphosphin.

## Beispiel 3

In einem Stahl-Rührautoklaven werden 205,4 g Triphenylphosphindichlorid-Chloroformaddukt in 1 Liter 1,2-Dimethoxyäthan in Gegenwart von 10,5 g Platin/Palladium-Kohle (1% Pt, 4% Pd) bei 50° und 5 bar während 12 Stunden hydriert. Ausbeute 96,3 g (81%) Triphenylphosphin.

## Beispiel 4

Eine Suspension von 18,1 g Triphenylphosphindichlorid-Chloroformaddukt und 0,9 g 5proz. Rhodiumkohle in 100 ml 1,2-Dimethoxyäthan wird bei 50° und 30 bar Wasserstoff während 12 Stunden hydriert. Nach Filtration des Katalysators und Destillation des Lösungsmittels werden durch Chromatographie an Kieselgel 8,51 g (81%) Triphenylphosphin erhalten.

Beispiel 5

18,1 g Triphenylphosphindichlorid-Chloroformaddukt werden in Gegenwart von 0,9 g 5proz. Rutheniumkohle in 100 ml Chloroform bei 125° und 30 bar Wasserstoff während 3 Stunden hydriert. Ausbeute 8,97 g (78%) Triphenylphosphin.

Beispiel 6

13,3 g Triphenylphosphindichlorid werden mit 0,9 g 5proz. Platinkohle als Katalysator in 100 ml Cyclohexan bei 125° und 30 bar Wasserstoff während 3 Stunden hydriert. Ausbeute 9,0 g (86%) Triphenylphosphin.

Beispiel 7

181 g Triphenylphosphindichlorid-Chloroformaddukt werden in Gegenwart von 9 g 5proz. Iridiumkohle in 1 Liter Chloroform bei 125° und 30 bar Wasserstoff während 3 Stunden hydriert. Ausbeute 91,7 g (87,5%) Triphenylphosphin.

Beispiel 8

Eine Suspension von 13,3 g Triphenylphosphindichlorid und 0,9 g 5proz. Platinkohle in 100 ml Toluol wird bei 125° und 5 bar Wasserstoffdruck während 2 Stunden hydriert. Ausbeute 9,1 g (86,8%) Triphenylphosphin.

**Patentansprüche**

1. Verfahren zur Herstellung von Triphenylphosphin durch Hydrogenolyse von Triphenylphosphindichlorid, dadurch gekennzeichnet, daß man die Hydrogenolyse in Gegenwart eines inerten Lösungsmittels mit Wasserstoff in Gegenwart eines Platin-, Palladium-, Rhodium-, Ruthenium- und/oder Iridiumkatalysators durchführt.
2. Verfahren nach Anspruch 1, dadurch gekennzeichnet, daß man als Lösungsmittel einen mindestens 2 Sauerstoffatome enthaltenden Äther verwendet, vorzugsweise Dioxan, oder 1,2-Dialkoxyäthane, z. B. 1,2-Dimethoxyäthan.
3. Verfahren nach Anspruch 1, dadurch gekennzeichnet, daß man als Lösungsmittel Chloroform, Benzol, Toluol, Xylol, Cyclohexan oder Äthylacetat verwendet.
4. Verfahren nach einem der Ansprüche 1—3, dadurch gekennzeichnet, daß man die Hydrogenolyse unter einem Druck von bis etwa 100 bar durchführt.
5. Verfahren nach einem der Ansprüche 1—4, dadurch gekennzeichnet, daß man die Hydrogenolyse bei einer Temperatur von 30 bis 130°C durchführt.
6. Verfahren nach einem der Ansprüche 1—5, dadurch gekennzeichnet, daß man die Hydrogenolyse bei einer Temperatur von 50 bis 60°C durchführt.
7. Verfahren nach einem der Ansprüche 1—6, dadurch gekennzeichnet, daß das Triphenylphosphindichlorid in Form eines Chloroformadduktes eingesetzt wird.
8. Verfahren nach einem der Ansprüche 1—7, dadurch gekennzeichnet, daß der Katalysator in Mengen bis 5% verwendet wird.

**Claims**

1. A process for the production of triphenylphosphine by hydrogenolysis of triphenylphosphine dichloride, characterised in that the hydrogenolysis is carried out in the presence of an inert solvent with hydrogen in the presence of a platinum, palladium, rhodium, ruthenium and/or iridium catalyst.
2. A process according to claim 1, characterised in that an ether containing at least 2 oxygen atoms, preferably dioxan, or a 1,2-dialkoxyethane, e.g. 1,2-dimethoxyethane, is used as solvent.
3. A process according to claim 1, characterised in that chloroform, benzene, toluene, xylene, cyclohexane or ethyl acetate is used as solvent.
4. A process according to one of claims 1—3, characterised in that the hydrogenolysis is carried out under a pressure of up to about 100 bar.
5. A process according to one of claims 1—4, characterised in that the hydrogenolysis is carried out at a temperature of from 30 to 130°C.
6. A process according to one of claims 1—5, characterised in that the hydrogenolysis is carried out at a temperature of from 50 to 60°C.
7. A process according to one of claims 1—6, characterised in that the triphenylphosphine dichloride is used in the form of a chloroform adduct.
8. A process according to one of claims 1—7, characterised in that the catalyst is used in an amount of up to 5%.

**Revendications**

1. Procédé de préparation de la triphénylphosphine par hydrogénolyse du dichlorure de triphénylphosphine, caractérisé en ce que l'on effectue l'hydrogénolyse en présence d'un solvant inerte à l'aide d'hydrogène en présence d'un catalyseur au platine, au palladium, au rhodium, au ruthénium et/ou à l'iridium.
2. Procédé selon la revendication 1, caractérisé en ce que l'on utilise en tant que solvant un éther contenant au moins 2 atomes d'oxygène, de préférence le dioxanne, ou un 1,2-dialcoxyéthane, par exemple le 1,2-diméthoxyéthane.
3. Procédé selon la revendication 1, caractérisé

en ce que l'on utilise en tant que solvant le chloroforme, le benzène, le toluène, le xylène, le cyclohexane ou l'acétate d'éthyle.

4. Procédé selon l'une des revendications 1 à 3, caractérisé en ce que l'on effectue l'hydrogénolyse sous une pression allant jusqu'à 100 bars environ.

5. Procédé selon l'une des revendications 1 à 4, caractérisé en ce que l'on effectue l'hydrogénolyse à une température de 30 à 130° C.

6. Procédé selon l'une des revendications 1 à 5, caractérisé en ce que l'on effectue l'hydrogénolyse à une température de 50 à 60° C.

7. Procédé selon l'une des revendications 1 à 6, caractérisé en ce que l'on met en oeuvre le dichlorure de triphénylphosphine à l'état d'adduct avec le chloroforme.

8. Procédé selon l'une des revendications 1 à 7, caractérisé en ce que l'on utilise le catalyseur en quantités allant jusqu'à 5%.